# EUROPEAN PATENT APPLICATION

(11) **EP 4 535 707 A1**
(43) Date of publication of application: **09.04.2025**
(21) Application number: 24203790.1
(22) Date of filing: 01.10.2024
(51) Int. Cl.: H04L 5/00, H04L 5/14

(54) **METHOD AND COMMUNICATION DEVICE FOR HANDLING A COMMUNICATION WITH A SERVING CELL**

(30) Priority: 06.10.2023 US 202363542782 P; 24.09.2024 US 202418894001
(71) Applicant: Acer Incorporated, New Taipei City 221 (TW)
(72) Inventor: Lee, Chien-Min, 221 New Taipei City (TW); Lo, Li-Chung, 221 New Taipei City (TW); Chen, Jen-Hsien, 221 New Taipei City (TW)
(74) Representative: Straus, Alexander

(57) **Abstract**

A method for handling a communication with a serving cell of a communication device (14, 20) includes: receiving a first configuration from a network, wherein the first configuration indicates a set of downlink symbols, a set of flexible symbols, and/or a set of uplink symbols (302); receiving a second configuration for the serving cell from the network, wherein the second configuration indicates a set of special symbols in the set of downlink symbols and/or the set of flexible symbols, and the set of special symbols comprises downlink sub-band(s) and uplink sub-band(s) (304); receiving indication(s) for a plurality of operations in a slot from the network (306); and determining whether to perform operation(s) of the plurality of operations in the slot (308); wherein the plurality of operations overlap with special symbol(s) in the set of special symbols; wherein the plurality of operations comprise downlink reception(s) and uplink transmission(s).

## Description

### Field of the Invention

The present invention is related to methods and a communication device used in a wireless communication system, and more particularly, to methods and a communication device for handling a communication with a serving cell.

### Background of the Invention

A long-term evolution (LTE) system supporting the 3rd Generation Partnership Project (3GPP) Rel-8 standard and/or the 3GPP Rel-9 standard is developed by the 3GPP as a successor of the universal mobile telecommunication system (UMTS) for further enhancing performance of the UMTS to satisfy increasing needs of users.

An LTE-advanced (LTE-A) system, as its name implies, is an evolution of the LTE system. The LTE-A system targets faster switching between power states, improves performance at the coverage edge of an evolved Node-B (eNB), increases peak data rate and throughput, and includes advanced techniques, such as carrier aggregation (CA), uplink (UL) multiple-input multiple-output (UL-MIMO), etc.

A next generation radio access network (NG-RAN) supporting the 3GPP Rel-15 standard - 3GPP Rel-19 standard is developed for further enhancing the LTE-A system. The NG-RAN includes one or more next generation Node-Bs (gNBs), and has properties of wider operation bands, different numerologies for different frequency ranges, massive MIMO, advanced channel codings, etc.

As a demand for a use of a communication device increases, the amount of signals (e.g., data, messages and/or packets) communicated between the communication device and a network in a serving cell also increases. The network may configure the communication device to perform operations with different transmission directions in a time period (e.g., a slot or a symbol), in order to satisfy the demand. It causes that the communication device need to switch the transmission direction multiple times in the time period. However, the communication device is not able to perform the more than one direction switch in the time period, and thus fails to perform the operations with the network device. Thus, how to handle a communication comprising the operations with different transmission directions between the communication device and the network with the serving cell is an important problem to be solved.

### Summary of the Invention

This in mind, the present invention aims at providing methods and a communication device for handling a communication with a serving cell to solve the abovementioned problem.

This is achieved by methods and a communication device for handling a communication with a serving cell according to the independent claims, respectively. The dependent claims pertain to corresponding further developments and improvements.

As will be seen more clearly from the detailed description following below, a claimed method for handling a communication with a serving cell of a communication device comprises: receiving a first configuration from a network, wherein the first configuration indicates at least one of a set of downlink (DL) symbols, a set of flexible symbols, and a set of uplink (UL) symbols in a time period; receiving a second configuration for the serving cell from the network, wherein the second configuration indicates a set of special symbols in at least one of the set of DL symbols and the set of flexible symbols, and the set of special symbols comprises at least one DL sub-band and at least one UL sub-band in different frequency regions of the serving cell; receiving at least one indication for a plurality of operations in a slot from the network; and determining whether to perform at least one operation of the plurality of operations in the slot; wherein the plurality of operations overlap with at least one special symbol in the set of special symbols; wherein the plurality of operations comprise at least one DL reception and at least one UL transmission.

A claimed communication device for handling a communication with a serving cell comprises: at least one storage device; and at least one processing circuit, coupled to the at least one storage device, wherein the at least one storage device is configured to store instructions, and the at least one processing circuit is configured to execute the instructions of: receiving a first configuration from a network, wherein the first configuration indicates at least one of a set of downlink (DL) symbols, a set of flexible symbols, and a set of uplink (UL) symbols in a time period; receiving a second configuration for the serving cell from the network, wherein the second configuration indicates a set of special symbols in at least one of the set of DL symbols and the set of flexible symbols, and the set of special symbols comprises at least one DL sub-band and at least one UL sub-band in different frequency regions of the serving cell; receiving at least one indication for a plurality of operations in a slot from the network; and determining whether to perform at least one operation of the plurality of operations in the slot; wherein the plurality of operations overlap with at least one special symbol in the set of special symbols; wherein the plurality of operations comprise at least one DL reception and at least one UL transmission.

A claimed method for a network handling a communication with a communication device comprises: transmitting a first configuration to the communication device, wherein the first configuration indicates at least one of a set of downlink (DL) symbols, a set of flexible symbols, and a set of uplink (UL) symbols in a time period; transmitting a second configuration for a serving cell to the communication device, wherein the second configuration indicates a set of special symbols in at least one of the set of DL symbols and the set of flexible symbols, and the set of special symbols comprises at least one DL sub-band and at least one UL sub-band in different frequency regions of the serving cell; and transmitting at least one indication for a plurality of operations in a slot to the communication device; wherein the plurality of operations overlap with at least one special symbol in the set of special symbols; wherein the plurality of operations comprise at least one DL reception and at least one UL transmission.

### Brief Description of the Drawings

In the following, the invention is further illustrated by way of example, taking reference to the following drawings.
FIG. 1 is a schematic diagram of a wireless communication system according to an example of the present invention.
FIG. 2 is a schematic diagram of a communication device according to an example of the present invention.
FIG. 3 is a flowchart of a process according to an example of the present invention.
FIG. 4 is a flowchart of a process according to an example of the present invention.
FIG. 5 is a flowchart of a process according to an example of the present invention.
FIG. 6 is a schematic diagram of a slot according to an example of the present invention.
FIG. 7 is a schematic diagram of a slot according to an example of the present invention.
FIG. 8 is a schematic diagram of a communication between a communication device and a network according to an example of the present invention.
FIG. 9 is a flowchart of a process according to an example of the present invention.
FIG. 10 is a schematic diagram of a communication between a communication device and a network according to an example of the present invention.
FIG. 11 is a schematic diagram of a communication between a communication device and a network according to an example of the present invention.
FIG. 12 is a flowchart of a process according to an example of the present invention.
FIG. 13 is a flowchart of a process according to an example of the present invention.
FIG. 14 is a flowchart of a process according to an example of the present invention.

### Detailed Description

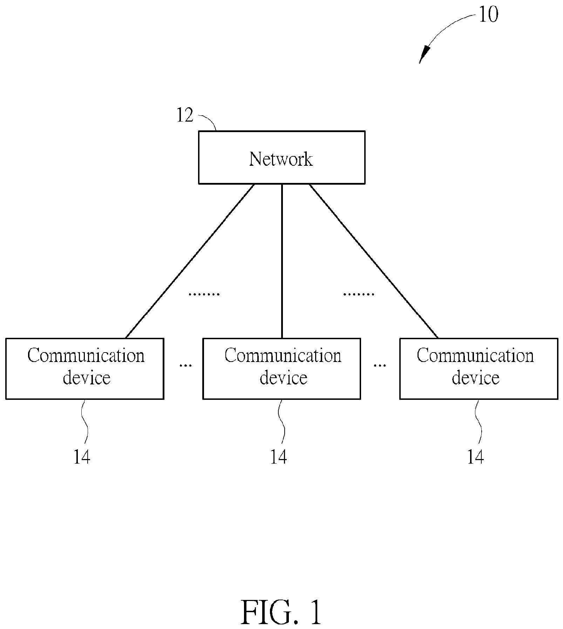

FIG. 1 is a schematic diagram of a wireless communication system 10 according to an example of the present invention. The wireless communication system 10 is briefly composed of a network 12 and a plurality of communication devices 14. The wireless communication system 10 may support a time-division duplexing (TDD) mode, a frequency-division duplexing (FDD) mode, a TDD-FDD joint operation mode, a non-terrestrial network (NTN) mode or a licensed-assisted access (LAA) mode. That is, the network 12 and a communication device 14 may communicate with each other via FDD carrier(s), TDD carrier(s), licensed carrier(s) (licensed serving cell(s)) and/or unlicensed carrier(s) (unlicensed serving cell(s)). In addition, the wireless communication system 10 may support a carrier aggregation (CA). That is, the network 12 and a communication device 14 may communicate with each other via multiple serving cells (e.g., multiple serving carriers) including a primary cell (e.g., primary component carrier) and one or more secondary cells (e.g., secondary component carriers).

In FIG. 1, the network 12 and the communication devices 14 are simply utilized for illustrating the structure of the wireless communication system 10. Practically, the network 12 may be a universal terrestrial radio access network (UTRAN) including at least one Node-B (NB) in a universal mobile telecommunications system (UMTS). In one example, the network 12 may be an evolved UTRAN (E-UTRAN) including at least one evolved NB (eNB) and/or at least one relay node in a long term evolution (LTE) system, an LTE-Advanced (LTE-A) system, an evolution of the LTE-A system, etc. In one example, the network 12 may be a next generation radio access network (NG-RAN) including at least one next generation Node-B (gNB) and/or at least one fifth generation (5G) base station (BS). In one example, the gNB or the 5G BS of network 12 may include a NTN Gateway and a NTN payload. In one example, the network 12 may be any BS conforming to a specific communication standard to communicate with a communication device 14.

A new radio (NR) is a standard defined for a 5G system (or 5G network) to provide a unified air interface with better performance. gNBs are deployed to realize the 5G system, which supports advanced features such as enhanced Mobile Broadband (eMBB), Ultra Reliable Low Latency Communications (URLLC), massive Machine Type Communications (mMTC), etc. The eMBB provides broadband services with a greater bandwidth and a low/moderate latency. The URLLC provides applications (e.g., end-to-end communication) with properties of a higher reliability and a low latency. The examples of the applications include an industrial internet, smart grids, infrastructure protection, remote surgery and an intelligent transportation system (ITS). The mMTC is able to support internet-of-things (IoT) of the 5G system which include billions of connected devices and/or sensors.

Furthermore, the network 12 may also include at least one of the UTRAN/E-UTRAN/NG-RAN and a core network, wherein the core network may include network entities such as Mobility Management Entity (MME), Serving Gateway (S-GW), Packet Data Network (PDN) Gateway (P-GW), Self-Organizing Networks (SON) server and/or Radio Network Controller (RNC), Access and Mobility Management Function (AMF), Session Management Function (SMF), User Plane Function (UPF), Authentication Server Function (AUSF), etc. In one example, after the network 12 receives information transmitted by a communication device 14, the information may be processed only by the UTRAN/E-UTRAN/NG-RAN and decisions corresponding to the information are made at the UTRAN/E-UTRAN/NG-RAN. In one example, the UTRAN/E-UTRAN/NG-RAN may forward the information to the core network, and the decisions corresponding to the information are made at the core network after the core network processes the information. In one example, the information may be processed by both the UTRAN/E-UTRAN/NG-RAN and the core network, and the decisions are made after coordination and/or cooperation are performed by the UTRAN/E-UTRAN/NG-RAN and the core network.

A communication device 14 may be a user equipment (UE), a Very Small Aperture Terminal (VSAT), a low cost device (e.g., machine type communication (MTC) device), a device-to-device (D2D) communication device, a narrow-band internet of things (IoT) (NB-IoT), a mobile phone, a laptop, a tablet computer, an electronic book, a portable computer system, or combination thereof. In addition, the network 12 and the communication device 14 can be seen as a transmitter or a receiver according to direction (i.e., transmission direction), e.g., for an uplink (UL), the communication device 14 is the transmitter and the network 12 is the receiver, and for a downlink (DL), the network 12 is the transmitter and the communication device 14 is the receiver.

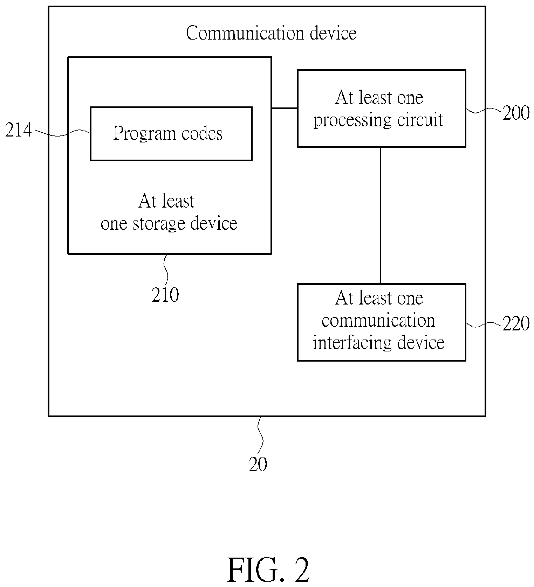

FIG. 2 is a schematic diagram of a communication device 20 according to an example of the present invention. The communication device 20 may be a communication device 14 or the network 12 shown in FIG. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include, but are not limited to, a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage device, non-transitory computer-readable medium (e.g., tangible media), etc. The at least one communication interfacing device 220 is preferably at least one transceiver and is used to transmit and receive signals (e.g., data, messages and/or packets) according to processing results of the at least one processing circuit 200.

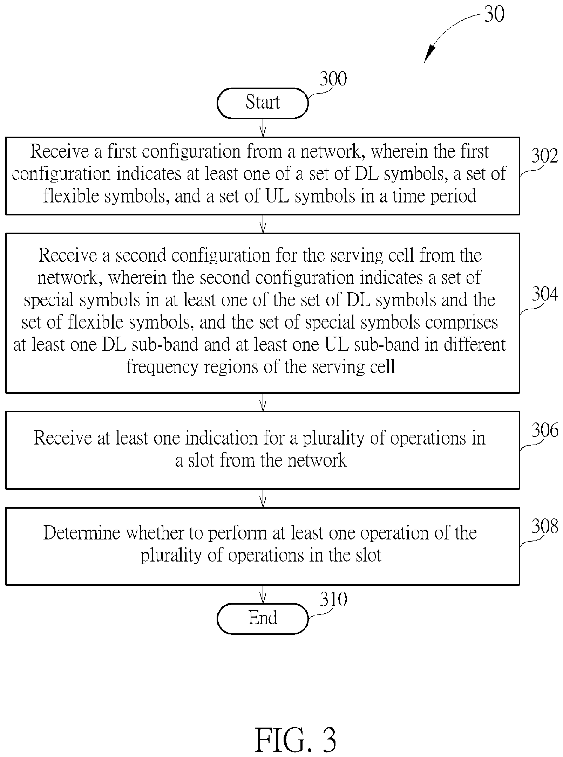

FIG. 3 is a flowchart of a process 30 according to an example of the present invention. The process 30 may be utilized in a communication device (e.g., a communication device 14 in FIG. 1 or the communication device 20 in FIG. 2), to handle a communication with a serving cell. The process 30 may be compiled into the program codes 214 and includes the following steps:

| | |
|---|---|
| Step 300: | Start. |
| Step 302: | Receive a first configuration from a network, wherein the first configuration indicates at least one of a set of DL symbols, a set of flexible symbols, and a set of UL symbols in a time period. |
| Step 304: | Receive a second configuration for the serving cell from the network, wherein the second configuration indicates a set of special symbols in at least one of the set of DL symbols and the set of flexible symbols, and the set of special symbols comprises at least one DL sub-band and at least one UL sub-band in different frequency regions of the serving cell. |
| Step 306: | Receive at least one indication for a plurality of operations in a slot from the network. |
| Step 308: | Determine whether to perform at least one operation of the plurality of operations in the slot. |
| Step 310: | End. |

According to the process 30, the communication device receives a first configuration (e.g., TDD-UL-DL-ConfigCommon) from a network. The first configuration indicates at least one of a set of DL symbols, a set of flexible symbols, and a set of UL symbols in a time period (e.g., at least one symbol or a radio frame). The communication device receives a second configuration for the serving cell from the network. The second configuration indicates a set of special symbols in at least one of the set of DL symbols and the set of flexible symbols, and the set of special symbols comprises at least one DL sub-band and at least one UL sub-band in different frequency regions of the serving cell. The communication device receives at least one indication for a plurality of operations in a slot from the network. Then, the communication device determines whether to perform at least one operation of the plurality of operations in the slot, e.g., according to at least one of the first configuration, the second configuration, and the at least one indication. That is, the communication device does not perform (e.g., drops) a part of the plurality of operations to avoid switching a transmission direction multiple times in the slot. Thus, the communication between the communication device and the network is performed normally.

Realization of the process 30 is not limited to the above description. The following examples may be applied to realize the process 30.

In one example, the plurality of operations overlap with at least one special symbol in the set of special symbols. In one example, the plurality of operations comprise at least one DL reception and at least one UL transmission. In one example, the slot comprises a plurality of symbols. In one example, the plurality of symbols are configured by at least one of the first configuration and the second configuration. In one example, the communication device transmits information to the network. In one example, the information indicates whether the communication device supports more than one switch point in one slot. In one example, a switch point indicates a direction switch (e.g., a transmission-to-reception (TX-RX) switch or a reception-to-transmission (RX-TX) switch).

In one example, a transmission power for one of the at least one UL transmission is determined (e.g., by the communication device) according to a first power information configured by the network. In one example, one of the at least one UL transmission is configured with the first power information and a second power information. In one example, the first power information corresponds to a special symbol in the set of special symbols, and the second power information corresponds to a UL symbol in the set of UL symbols. In one example, the first power information comprises at least one first parameter (e.g., closedLoopIndex, p0-PUCCH-Id and/or PathlossReferenceRS-Id). In one example, the second power information comprises at least one second parameter (e.g., closedLoopIndex, p0-PUCCH-Id and/or PathlossReferenceRS-Id).

In one example, a spatial relation for one of the at least one UL transmission is determined (e.g., by the communication device) according to a first spatial relation information configured by the network. In one example, one of the at least one UL transmission is configured with the first spatial relation information and a second spatial relation information. In one example, the first spatial relation information corresponds to a special symbol in the set of special symbols, and the second spatial relation information corresponds to a UL symbol in the set of UL symbols. In one example, the first spatial relation information comprises a first spatial relation information identity (ID). In one example, the second spatial relation information comprises a second spatial relation information ID. In one example, the first spatial relation information comprises a first reference signal (RS) (e.g., a synchronization signal block (SSB) index, a channel state information RS (CSI-RS) index or a SRS). In one example, the second spatial relation information comprises a second RS (e.g., a SSB index, a CSI-RS index or a SRS).

In one example, a number of physical resource blocks (PRBs) for one of the at least one UL transmission is determined (e.g., by the communication device) according to a first code rate. In one example, one of the at least one UL transmission is configured with the first code rate and a second code rate. In one example, the first code rate corresponds to a special symbol in the set of special symbols, and the second code rate corresponds to a UL symbol in the set of UL symbols. In one example, the communication device is configured with a power offset. In one example, the communication device performs one of the at least one UL transmission in a special symbol in the set of special symbols according to the power offset.

In one example, the communication device determines a UL resource (e.g., in the at least one UL sub-band) according to at least one of a resource configuration and a starting PRB. In one example, the communication device performs one of the at least one UL transmission (e.g., with the network) on the UL resource in a special symbol in the set of special symbols. In one example, a first number of PRB of the UL resource is the same as a second number of PRB for the one of the at least one UL transmission not overlapping with at least one special symbol. In one example, the starting PRB is determined according to at least one of an offset, the resource configuration, a DL control information (DCI) and a higher-layer signal (e.g., a radio resource control (RRC) signal). In one example, the offset indicates a set of frequency domain resource (e.g., a number of at least one PRB). In one example, the offset is selected from a set of candidate offsets which is configured by a higher-layer signal. In one example, the offset is a specific offset value for the one of the at least one UL transmission configured by a higher-layer signal. In one example, the resource configuration is configured for the one of the at least one UL transmission. In one example, the starting PRB is indicated for the one of the at least one UL transmission. In one example, the starting PRB is indicated for the one of the at least one UL transmission which is transmitted in the at least one special symbol. In one example, the starting PRB is specific for the at least one special symbol. In one example, the one of the at least one UL transmission is a physical UL control channel (PUCCH) or a physical UL shared channel (PUSCH).

In one example, the communication device performs one of the at least one UL transmission (e.g., with the network) in a special symbol in the set of special symbols via a part of a resource within the at least one UL sub-band, in response to the resource overlapping with the at least one DL sub-band in the special symbol. That is, the one of the at least one UL transmission is not performed via a remaining part of the resource within the at least one DL sub-band. In one example, if a 1st PRB of the resource for one of the at least one UL transmission overlaps with the at least one DL sub-band, the communication device determines a 1st PRB for performing the one of the at least one UL transmission as a 1st PRB of the at least one UL sub-band. In one example, if a last PRB of the resource for one of the at least one UL transmission overlaps with the at least one DL sub-band, the communication device determines a last PRB for performing the one of the at least one UL transmission as a last PRB of the at least one UL sub-band.

In one example, the communication device receives a first indicator from the network. In one example, the first indicator indicates at least one direction for the slot (e.g., the set of special symbols in the slot), and the at least one direction comprises at least one of DL, UL and flexible. In one example, the first indicator provides a direction for each special symbol in the set of special symbols in the slot. In one example, the first indicator is comprised in at least one of a DCI, a medium access control (MAC) control element (CE), and a RRC signal. In one example, the communication device transmits a capability information to the network to inform whether the communication device is capable to receive the first indicator, before receiving the first indicator. In one example, the at least one direction for the slot is at least one fixed direction (e.g., UL and/or DL).

In one example, the communication device performs a first operation of the plurality of operations (e.g., with the network) in a first part of the slot, in response to the first operation being a UL transmission and the first indicator indicating UL for the first part of the slot. In one example, the communication device performs a second operation of the plurality of operations (e.g., with the network) in a second part of the slot, in response to the second operation being a DL reception and the first indicator indicating DL for the second part of the slot. That is, the communication device performs an operation of the plurality of operations in a part of the slot, when a direction for the operation is the same as a direction for the part of the slot indicated by the first indicator.

In one example, the communication device disables performing a third operation of the plurality of operations (e.g., with the network) in a third part of the slot, in response to the third operation being a UL transmission and the first indicator indicating DL for at least one first symbol of the third part of the slot. In one example, the communication device disables performing a fourth operation of the plurality of operations (e.g., with the network) in a fourth part of the slot, in response to the fourth operation being a DL reception and the first indicator indicating UL for at least one second symbol of the fourth part of the slot. That is, the communication device disables performing an operation of the plurality of operations in a part of the slot, when a direction for the operation is different from a direction for the part of the slot indicated by the first indicator.

In one example, the communication device performs a fifth operation of the plurality of operations (e.g., with the network) in a fifth part of the slot, in response to the fifth operation being triggered by a DCI and the first indicator indicating flexible for the fifth part of the slot. That is, the communication device disables performing an operation of the plurality of operations in a part of the slot, when the operation being is triggered by a signal other than a DCI (e.g., a higher-layer signal) and the first indicator indicates flexible for the part of the slot.

In one example, the communication device performs a sixth operation of the plurality of operations (e.g., with the network) in a sixth part of the slot, in response to the sixth operation being a UL transmission and a first direction in the sixth part of the slot is not DL. In one example, the first direction is a fixed (or default) direction or is determined according to a higher-layer configuration. In one example, the fixed (or default) direction is determined according to a (default) capability for the communication device. In one example, the higher-layer configuration may be the first configuration or a UE specific UL-DL configuration, but is not limited herein. In one example, the communication device performs a seventh operation of the plurality of operations (e.g., with the network) in a seventh part of the slot, in response to the seventh operation being a DL reception and a second direction in the seventh part of the slot is not UL. In one example, the second direction is the fixed (or default) direction or is determined according to the higher-layer configuration. That is, the communication device performs an operation of the plurality of operations in a part of the slot, when a direction for the operation does not conflict with a direction for the part of the slot.

In one example, the communication device disables performing an eighth operation of the plurality of operations (e.g., with the network), in response to the eighth operation being indicated (or triggered) by a higher-layer configuration. In one example, the communication device does not receive (e.g., is configured to receive but miss, does not expect to receive, disables receiving, or is not configured by the network to receive) a second indicator from the network. In one example, the second indicator indicates at least one direction for the slot, and the at least one direction comprises at least one of DL, UL and flexible. In one example, the higher-layer configuration comprises (e.g., is) a TDD UL-DL configuration (e.g., the first configuration or the UE specific UL-DL configuration). In one example, the second indicator is the same as the first indicator. In one example, the second indicator is different from the first indicator.

In one example, the communication device determines a plurality of priorities for the plurality of operations, in response to the more than one switch point in the slot or in response to the plurality of operations with different directions overlapping in a time period. In one example, the plurality of priorities correspond to the plurality of operations, respectively. In one example, the communication device does not have a capability for performing the more than one direction switch in the slot. That is, the communication device is not able to switch the transmission direction multiple times in the slot.

In one example, the communication device does not receive (e.g., is configured to receive but miss, does not expect to receive, disables receiving, or is not configured by the network to receive) a third indicator from the network. In one example, the third indicator indicates at least one direction for the slot, and the at least one direction comprises at least one of DL, UL and flexible. In one example, the third indicator is the same as the first indicator. In one example, the third indicator is different from the first indicator. In one example, a tenth operation of the plurality of operations is a DL reception other than a semi persistent scheduling physical DL shared channel (SPS-PDSCH), in response to a eleventh operation of the plurality of operations overlapping with the tenth operation is a configure grant physical uplink shared channel (CG-PUSCH). In one example, a twelfth operation of the plurality of operations is a UL transmission other than a CG-PUSCH, in response to a thirteenth operation of the plurality of operations overlapping with the twelfth operation is a SPS-PDSCH.

In one example, the communication device determines the plurality of priorities according to a plurality of priority indexes. In one example, the plurality of priority indexes correspond to the plurality of operations, respectively. In one example, a priority index with a first value represents a high priority. In one example, a priority index with a second value represents a low priority. That is, the first value has a higher priority than the second value. In one example, the first value may be 1, but is not limited herein. In one example, the second value may be 0, but is not limited herein.

In one example, the communication device determines that a fourteenth operation of the plurality of operations has a lower priority than a fifteenth operation of the plurality of operations, in response to the fourteenth operation for transmitting or receiving a RS. That is, an operation which comprises a RS has a lower priority than other operation which does not comprise the RS. In one example, the communication device determines that a sixteenth operation of the plurality of operations has a higher priority than a seventeenth operation of the plurality of operations, in response to the sixteenth operation being a DL reception comprising a PDSCH and a first priority index for a physical uplink control channel (PUCCH) for transmitting a hybrid automatic repeat request acknowledgement (HARQ-ACK) of the PDSCH being higher than a second priority index corresponding to the seventeenth operation.

In one example, the communication device determines that a eighteenth operation of the plurality of operations has a higher priority than a nineteenth operation of the plurality of operations, in response to the eighteenth operation being triggered by a first DCI and the nineteenth operation being triggered by a signal other than the first DCI. In one example, the communication device determines that a twentieth operation of the plurality of operations has a higher priority than a twenty-first operation of the plurality of operations, in response to the twentieth operation being triggered by a second DCI that ends later than a third DCI which triggers the twenty-first operation. In one example, the communication device determines that a twenty-second operation of the plurality of operations has a higher priority than a twenty-third operation of the plurality of operations, in response to the twenty-second operation starting earlier than the twenty-third operation.

In one example, the communication device does not perform (e.g., drops) a twenty-fourth operation of the plurality of operations (e.g., with the network), in response to the twenty-fourth operation overlapping with a twenty-fifth operation of the plurality of operations in the time period. In one example, the twenty-fourth operation is a first UL transmission comprising a first PUCCH for a first HARQ-ACK (or a first scheduling request (SR)), and the first HARQ-ACK (or the first SR) is able to be deferred in a next slot. In one example, the twenty-fifth operation is a first DL reception comprising a first PDSCH (e.g., a SPS-PDSCH) which is not triggered by a DCI. In one example, a first priority of the first PUCCH and a second priority of a second PUCCH for transmitting a second HARQ-ACK of the first PDSCH are the same. In one example, the twenty-fifth operation does not overlap the at least one UL sub-band.

In one example, the communication device determines a twenty-fifth operation of the plurality of operations with a lowest priority among the plurality of operations, in response to the twenty-fifth operation being a first or latest one of the plurality of operations. In one example, the plurality of operations are triggered by a signal(s) other than a DCI(s), and correspond to a plurality of priority indexes with a same value. In one example, the communication device determines the twenty-fifth operation of the plurality of operations with the lowest priority among the plurality of operations, in response to the twenty-fifth operation being triggered by a DCI that ends earlier than other DCI(s) which triggers other operation(s) of the plurality of operations. In one example, the plurality of operations are triggered by the DCI(s), and correspond to the plurality of priority indexes with the same value. In one example, the communication device determines the twenty-fifth operation of the plurality of operations with the lowest priority among the plurality of operations, in response to the twenty-fifth operation comprising a RS. In one example, the plurality of operations are triggered by the DCI(s) or the signal(s) other than the DCI(s). In one example, the plurality of operations do not overlap with each other. In one example, the plurality of operations correspond to the plurality of priority indexes with the same value.

In one example, the communication device performs a twenty-sixth operation of the plurality of operations (e.g., with the network) in an eighth part of the slot, in response to the twenty-sixth operation being a UL transmission and the eighth part of the slot being configured as at least one flexible symbol in the set of flexible symbols according to the first configuration, e.g., when the communication device does not receive the second indicator or the third indicator from the network. In one example, the communication device performs a twenty-seventh operation of the plurality of operations (e.g., with the network) in a ninth part of the slot, in response to the twenty- seventh operation being a DL reception and the ninth part of the slot being configured as at least one DL symbol in the set of DL symbols according to the first configuration, e.g., when the communication device does not receive the second indicator or the third indicator from the network.

In one example, the communication device determines a set of directions for the set of special symbols according to a fourth indicator (e.g., a TDD UL-DL pattern or a UL specific TDD UL-DL configuration) configured by a higher-layer signal, e.g., when the communication device does not receive the second indicator or the third indicator from the network. In one example, the set of directions comprises at least one of DL and UL. In one example, the fourth indicator provides a direction for each special symbol in the set of special symbols in the slot. In one example, the communication device reconfigures the set of special symbols according to the first configuration, e.g., when the communication device does not receive the second indicator or the third indicator from the network.

In one example, the communication device determines a special symbol overlapping with a control resource set (CORESET) for a physical DL control channel (PDCCH) monitoring as a DL symbol, when the communication device does not receive the second indicator or the third indicator from the network and does not receive a DCI which indicates the communication device to perform a UL transmission in the special symbol. In one example, the UL transmission comprises at least one of a sounding reference signal (SRS), a PUSCH, a PUCCH, and a physical random access channel (PRACH). In one example, the CORESET completely or partially overlaps with the at least one DL sub-band in the special symbol. In one example, the communication device monitors a PDCCH in the special symbol according to the CORESET. In one example, the special symbol is one of the set of special symbols.

In one example, the communication device determines that a UL transmission of the plurality of operations has a higher priority than a DL reception of the plurality of operations, in response to the UL transmission and the DL reception in a same special symbol in the set of special symbols (e.g., configured according to a third configuration). In one example, the communication device determines that the DL reception of the plurality of operations has a higher priority than the UL transmission of the plurality of operations, in response to the UL transmission and the DL reception in a same special symbol in the set of special symbols (e.g., configured according to the third configuration). In one example, the third configuration comprises (e.g., is) a node-B (NB) configuration.

In one example, the communication device does not perform (e.g., drops) a twenty-eighth operation of the plurality of operations (e.g., with the network), in response to the twenty-eighth operation overlapping with a twenty-ninth operation of the plurality of operations in the time period. In one example, the twenty-eighth operation is a second DL reception comprising a second PDSCH (e.g., a SPS-PDSCH) which is not triggered by a DCI. In one example, the twenty-ninth operation is a second UL transmission comprising a third PUCCH for a third HARQ-ACK (or a second SR), and the third HARQ-ACK (or the second SR) is able to be deferred in a next slot. In one example, a third priority of the third PUCCH and a fourth priority of a fourth PUCCH for transmitting a fourth HARQ-ACK of the second PDSCH are the same. In one example, the twenty-eighth operation overlaps the at least one UL sub-band.

In one example, the communication device does not perform (e.g., drops) a thirtieth operation of the plurality of operations (e.g., with the network), in response to the thirtieth operation overlapping with a thirtieth-first operation of the plurality of operations in the time period. In one example, the thirtieth operation is a third UL transmission comprising a first CG-PUSCH, and the first CG-PUSCH is configured with a type A repetition. The type A repetition represents that repetitions for the first CG-PUSCH are transmitted in different slots/symbols. In one example, the thirtieth-first operation is a third DL reception comprising a third PDSCH (e.g., a SPS-PDSCH) which is not triggered by a DCI. In one example, a fifth priority of the first CG-PUSCH and a sixth priority of a fifth PUCCH for transmitting a fifth HARQ-ACK of the third PDSCH are the same. In one example, the thirtieth-first operation does not overlap the at least one UL sub-band.

In one example, the communication device does not perform (e.g., drops) a thirtieth-second operation of the plurality of operations (e.g., with the network), in response to the thirtieth-second operation overlapping with a thirtieth-third operation of the plurality of operations in the time period. In one example, the thirtieth-second operation is a fourth DL reception comprising a fourth PDSCH (e.g., a SPS-PDSCH) which is not triggered by a DCI. In one example, the thirtieth-third operation is a fourth UL transmission comprising a second CG-PUSCH, and the second CG-PUSCH is configured with a type B repetition. The type B repetition represents that at least two repetitions for the second CG-PUSCH are transmitted in a same slot, and no gap between the at least two repetitions. In one example, a seventh priority of the second CG-PUSCH and an eighth priority of a sixth PUCCH for transmitting a sixth HARQ-ACK of the fourth PDSCH are the same.

In one example, the communication device does not perform (e.g., drops) a part of a thirtieth-fourth operation of the plurality of operations (e.g., with the network), in response to the thirtieth-fourth operation overlapping with a thirtieth-fifth operation of the plurality of operations in the time period. In one example, the thirtieth-fourth operation is a fifth UL transmission comprising a third CG-PUSCH, and the third CG-PUSCH is configured with the type B repetition. In one example, the thirtieth-fifth operation is a fifth DL reception comprising a fifth PDSCH (e.g., a SPS-PDSCH) which is not triggered by a DCI. In one example, a ninth priority of the third CG-PUSCH and a tenth priority of a seventh PUCCH for transmitting a seventh HARQ-ACK of the fifth PDSCH are the same. In one example, the part of the thirtieth-fourth operation comprises at least one first repetition for the third CG-PUSCH which overlaps with the thirtieth-fifth operation. In one example, the part of the thirtieth-fourth operation further comprises at least one second repetition for the third CG-PUSCH after the at least one first repetition.

In one example, two operations with different directions (e.g., a DL reception and a UL transmission) of the plurality of operations are not configured (or scheduled) by the network in a same slot, symbol or time period. That is, the communication device does not expect the two operations with different directions in the same slot, symbol or time period, e.g., if they are respectively triggered/scheduled by DCIs or signals other than the DCIs.

In one example, two operations of the first operation to the thirtieth-fifth operation in previous different examples may be the same operation. For example, the first operation may be the same as the sixth operation, but is not limited herein. In one example, one of the first operation to the thirtieth-fifth operation may be the same as (the) one of the at least one UL transmission mentioned in previous examples. For example, in a case that the first operation and the one of the at least one UL transmission are the same, the communication device performs an operation of the plurality of operations (e.g., with the network) in a part of the slot via a part of a resource within the at least one UL sub-band, in response to the operation being a UL transmission, the first indicator indicating UL for the part of the slot and the resource overlapping with the at least one DL sub-band in a special symbol in the set of special symbols, but is not limited herein. In one example, (the) one of the at least one UL transmission mentioned in previous different examples may be the same UL transmission. For example, one of the at least one UL transmission is configured with the first spatial relation information and the second spatial relation information, and the communication device performs the one of the at least one UL transmission in a special symbol in the set of special symbols via a part of a resource within the at least one UL sub-band in response to the resource overlapping with the at least one DL sub-band in the special symbol, but is not limited herein.

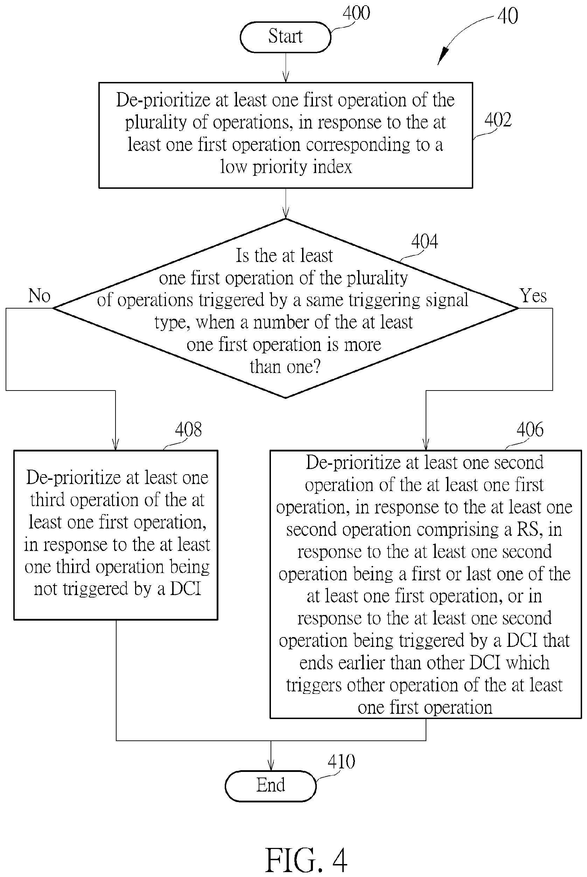

FIG. 4 is a flowchart of a process 40 according to an example of the present invention. The process 40 may be utilized in a communication device (e.g., a communication device 14 in FIG. 1 or the communication device 20 in FIG. 2), to determine a plurality of priorities of a plurality of operations (e.g., the plurality of operations in the process 30). The process 40 may be compiled into the program codes 214 and includes the following steps:

| | |
|---|---|
| Step 400: | Start. |
| Step 402: | De-prioritize at least one first operation of the plurality of operations, in response to the at least one first operation corresponding to a low priority index. |
| Step 404: | Is the at least one first operation of the plurality of operations triggered (or scheduled) by a same triggering signal type, when a number of the at least one first operation is more than one? If yes, perform Step 406. If no, perform Step 408. |
| Step 406: | De-prioritize at least one second operation of the at least one first operation, in response to the at least one second operation comprising a RS, in response to the at least one second operation being a first or last one of the at least one first operation, or in response to the at least one second operation being triggered (or scheduled) by a DCI that ends earlier than other DCI which triggers other operation of the at least one first operation. |
| Step 408: | De-prioritize at least one third operation of the at least one first operation, in response to the at least one third operation being not triggered (or scheduled) by a DCI. |
| Step 410: | End. |

The following examples may be applied to realize the process 40. In one example, the low priority index may be the priority index with the second value in the examples for the process 30 (e.g., a priority index "0"), but is not limited herein. In one example, a triggering signal type may be a DCI or a non-DCI signal. The non-DCI signal may be a signal other than the DCI such as a higher-layer signal (e.g., a RRC signal), but is not limited herein. In one example, the communication device determines the at least one first operation with a lowest priority among the plurality of operations, when the number of the at least one first operation is one. In one example, Step 402 may be skipped, when the plurality of priority indexes corresponding to the plurality of operations have a same value.

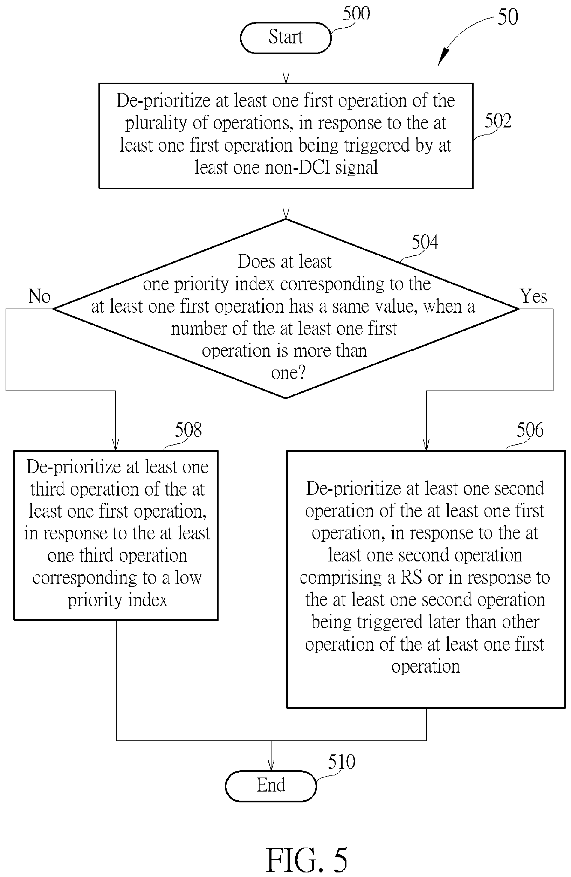

FIG. 5 is a flowchart of a process 50 according to an example of the present invention. The process 50 may be utilized in a communication device (e.g., a communication device 14 in FIG. 1 or the communication device 20 in FIG. 2), to determine a plurality of priorities of a plurality of operations (e.g., the plurality of operations in the process 30). The process 50 may be compiled into the program codes 214 and includes the following steps:

| | |
|---|---|
| Step 500: | Start. |
| Step 502: | De-prioritize at least one first operation of the plurality of operations, in response to the at least one first operation being triggered (or scheduled) by at least one non-DCI signal. |
| Step 504: | Does at least one priority index corresponding to the at least one first operation has a same value, when a number of the at least one first operation is more than one? If yes, perform Step 506. If no, perform Step 508. |
| Step 506: | De-prioritize at least one second operation of the at least one first operation, |
| | in response to the at least one second operation comprising a RS or in response to the at least one second operation being triggered (or scheduled) later than other operation of the at least one first operation. |
| Step 508: | De-prioritize at least one third operation of the at least one first operation, in response to the at least one third operation corresponding to a low priority index. |
| Step 510: | End. |

The following examples may be applied to realize the process 50. In one example, the low priority index may be the priority index with the second value in the examples for the process 30 (e.g., a priority index "0"), but is not limited herein. In one example, the communication device determines the at least one first operation with a lowest priority among the plurality of operations, when the number of the at least one first operation is one. In one example, Step 502 may be skipped, when the plurality of operations triggered (or scheduled) by a same triggering signal type. In one example, a triggering signal type may be a DCI or a non-DCI signal. The non-DCI signal may be a signal other than the DCI such as a higher-layer signal (e.g., a RRC signal), but is not limited herein.

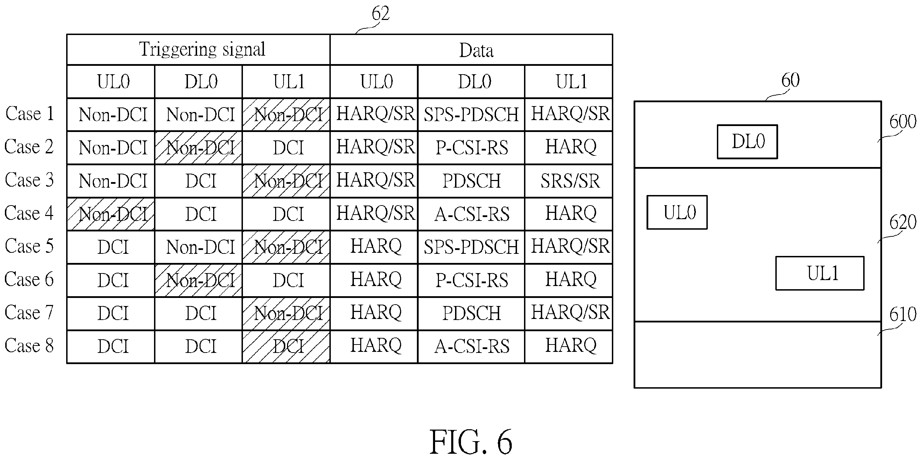

FIG. 6 is a schematic diagram of a slot 60 according to an example of the present invention. In Fig. 6, the slot 60 comprises DL sub-bands 600 and 610 and a UL sub-band 620. Three operations (i.e., a DL reception DL0, a UL transmission UL0 and a UL transmission UL1) are configured to be performed in the slot 60, and do not overlap with each other in time. That is, there are two switch points in the slot 60. One switch point is between the UL transmission UL0 and the DL reception DL0, and other switch point is between the DL reception DL0 and the UL transmission UL1.

In Fig. 6, a table 62 shows information for the three operations in cases 1-8. The information in the table 62 comprises triggering signals (e.g., triggering signal types) of the three operations and data in the three operations. In the table 62, "DCI" represents that an operation is triggered by a DCI. "Non-DCI" represents that an operation is triggered by a non-DCI (e.g., RRC) signal. "HARQ" represents that an operation comprises a HARQ-ACK. "SR" represents that an operation comprises a scheduling request. "SRS" represents that an operation comprises a sounding RS. "SPS-PDSCH" represents that an operation comprises a SPS-PDSCH. "PDSCH" represents that an operation comprises a PDSCH. "P-CSI-RS" represents that an operation comprises a periodic channel status information (CSI) RS. "A-CSI-RS" represents that an operation comprises an aperiodic CSI RS.

In Fig. 6, they are assumed that priority indexes corresponding to the three operations have a same value and a triggering order of the three operations is the UL transmission UL0, the DL reception DL0 and the UL transmission UL1. In the cases 1-8, a communication device determines one of the three operations with a lowest priority, e.g., according to the process 40 or 50, and drops the one of the three operations with the lowest priority to reduce a number of the switch points in the slot 60. The slash blocks in the table 62 are the operation with the lowest priority which the communication device determines and drops. Then, the communication device performs remaining operations (e.g., the at least one operation in the process 30) in the slot 60.

In the case 1, the communication device determines the UL transmission UL1 with the lowest priority, in response to the UL transmission UL1 being triggered later than the UL transmission UL0 and the DL reception DL0. In the case 2, the communication device determines the DL reception DL0 with the lowest priority, in response to the DL reception DL0 being triggered by a non-DCI signal and comprising a RS. In the case 3, the communication device determines the UL transmission UL1 with the lowest priority, in response to the UL transmission UL1 being triggered by the non-DCI signal and being triggered later than the UL transmission UL0. In the case 4, the communication device determines the UL transmission UL0 with the lowest priority, in response to the UL transmission UL0 being triggered by the non-DCI signal.

In the case 5, the communication device determines the UL transmission UL1 with the lowest priority, in response to the UL transmission UL1 being triggered by the non-DCI signal and being triggered later than the DL reception DL0. In the case 6, the communication device determines the DL reception DL0 with the lowest priority, in response to the DL reception DL0 being triggered by the non-DCI signal. In the case 7, the communication device determines the UL transmission UL1 with the lowest priority, in response to the UL transmission UL1 being triggered by the non-DCI signal. In the case 8, the communication device determines the UL transmission UL1 with the lowest priority, in response to the UL transmission UL1 being triggered later than the UL transmission UL0 and the DL reception DL0.

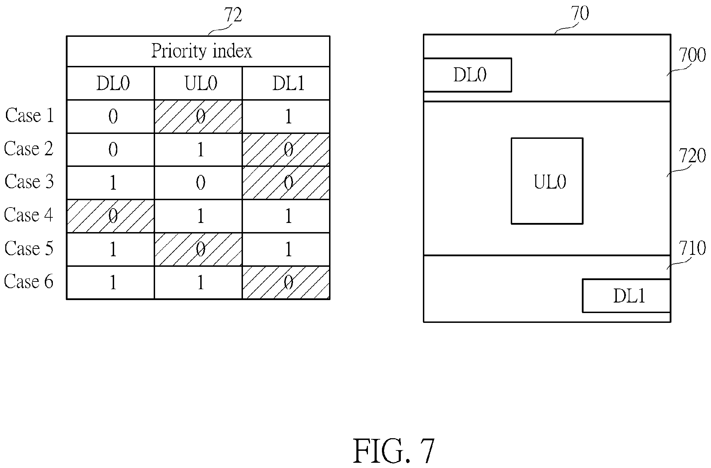

FIG. 7 is a schematic diagram of a slot 70 according to an example of the present invention. In Fig. 7, the slot 70 comprises DL sub-bands 700 and 710 and a UL sub-band 720. Three operations (i.e., a DL reception DL0, a DL reception DL1 and a UL transmission UL0) are configured to be performed in the slot 70, and do not overlap with each other in time. That is, there are two switch points in the slot 70. One switch point is between the DL reception DL0 and the UL transmission UL0, and other switch point is between the UL transmission UL0 and the DL reception DL1.

In Fig. 7, a table 72 shows information for the three operations in cases 1-6. The information in the table 72 comprises priority indexes of the three operations. A priority index "1" has a higher priority than a priority index "0". In the cases 1-6, a communication device determines one of the three operations with a lowest priority, e.g., according to the process 40 or 50, and drops the one of the three operations with the lowest priority to reduce a number of the switch points in the slot 70. The slash blocks in the table 72 are the operation with the lowest priority which the communication device determines and drops. Then, the communication device performs remaining operations (e.g., the at least one operation in the process 30) in the slot 70.

In one example for FIG. 7, they are assumed that the three operations are triggered by a same triggering signal type (e.g., DCI) and an ending order of DCIs corresponds to the DL reception DL1, the UL reception UL0 and the DL reception DL0. The DCIs are used for triggering the three operations, respectively. In the case 1, the communication device determines the UL transmission UL0 with the lowest priority, in response to the UL transmission UL0 with the priority index "0" being triggered by a DCI that ends earlier than a DCI which triggers the DL reception DL0. In the case 2, the communication device determines the DL reception DL1 with the lowest priority, in response to the DL reception DL1 with the priority index "0" being triggered by a DCI that ends earlier than the DCI which triggers the DL reception DL0. In the case 3, the communication device determines the DL reception DL1 with the lowest priority, in response to the DL reception DL1 with the priority index "0" being triggered by the DCI that ends earlier than the DCI which triggers the UL transmission UL0. In the case 4, the communication device determines the DL reception DL0 with the lowest priority, in response to the DL reception DL0 with the priority index "0". In the case 5, the communication device determines the UL transmission UL0 with the lowest priority, in response to the UL transmission UL0 with the priority index "0". In the case 6, the communication device determines the DL reception DL1 with the lowest priority, in response to the DL reception DL1 with the priority index "0".

In one example for FIG. 7, it is assumed that two of the three operations with the priority index "0" are triggered by different triggering signal types (e.g., a DCI and a non-DCI signal). In the case 1, the DL reception DL0 is triggered by the DCI, and the UL transmission UL0 is triggered by the non-DCI signal. The communication device determines the UL transmission UL0 with the lowest priority, in response to the UL transmission UL0 with the priority index "0" being triggered by the non-DCI signal. In the case 2, the DL reception DL0 is triggered by the DCI, and the DL reception DL1 is triggered by the non-DCI signal. The communication device determines the DL reception DL1 with the lowest priority, in response to the DL reception DL1 with the priority index "0" being triggered by the non-DCI signal. In the case 3, the UL transmission UL0 is triggered by the DCI, and the DL reception DL1 is triggered by the non-DCI signal. The communication device determines the DL reception DL1 with the lowest priority, in response to the DL reception DL1 with the priority index "0" being triggered by the non-DCI signal. In the case 4, the communication device determines the DL reception DL0 with the lowest priority, in response to the DL reception DL0 with the priority index "0". In the case 5, the communication device determines the UL transmission UL0 with the lowest priority, in response to the UL transmission UL0 with the priority index "0". In the case 6, the communication device determines the DL reception DL1 with the lowest priority, in response to the DL reception DL1 with the priority index "0".

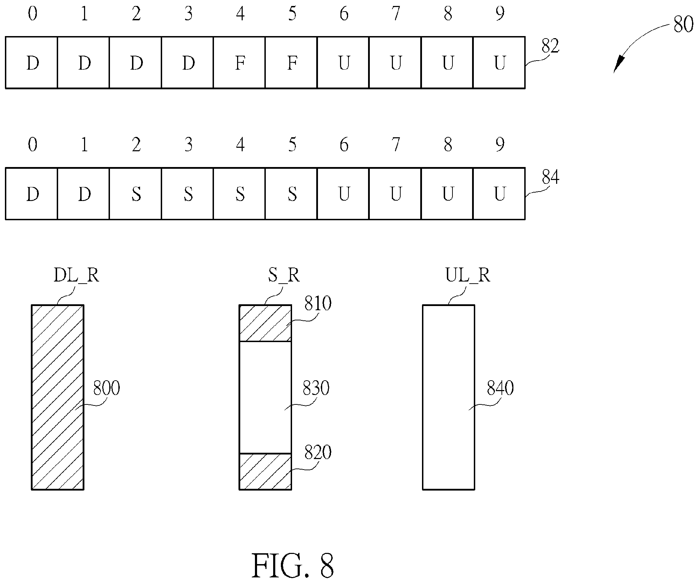

FIG. 8 is a schematic diagram of a communication 80 between a communication device and a network according to an example of the present invention. The communication device receives a UL-DL configuration and a special resource configuration from the network (not shown in FIG. 8). The UL-DL configuration and the special resource configuration may be the first configuration and the second configuration in the process 30, respectively. The UL-DL configuration and the special resource configuration are used to indicate types (e.g., directions) of slots 0-9 in a frame (e.g., a frame 82 or a frame 84). The UL-DL configuration indicates that the slots 0-3 are DL slots, the slots 4-5 are flexible slots, and the slots 6-9 are UL slots. The special resource configuration indicates that the slots 2-5 are special slots. A LTL slot, a DL slot, a flexible slot and a special slot are represented as "U", "D", "F" and "S", respectively.

In FIG. 8, the communication device determines the types of the slots 0-9 of the frame according to the UL-DL configuration. The determined frame can be represented as the frame 82. Then, the communication device re-determines the slots 2-5 as the special slots according to the special resource configuration. The re-determined frame can be represented as the frame 84. Each of the slots 0-1 of the frame 84 comprises a resource DL_R which comprises a DL sub-band 800. Each of the slots 2-5 of the frame 84 comprises a resource S_R which comprises DL sub-bands 810 and 820 and a UL sub-band 830. Each of the slots 6-9 of the frame 84 comprises a resource UL_R which comprises a UL sub-band 840. In the resources DL_R, S_R and UL_R, DL sub-bands are represented as slash blocks, and UL sub-bands are represented as blank blocks.

In one example for FIG. 8, the communication device further receives an indicator from the network (not shown in FIG. 8). The indicator may be the first indicator in the examples for the process 30, and indicates that a direction for the slot 2 of the frame 84 is DL and directions for the slots 3-5 of the frame 84 are UL. In the slots 0-1 of the frame 84, the communication device may perform a DL reception(s) in the DL sub-band 800, since the slots 0-1 of the frame 84 are the DL slots. In the slot 2 of the frame 84, the communication device may perform a DL reception(s) in the DL sub-band(s) 810 and/or 820, in response to the indicator indicating that the direction for the slot 2 is DL. In the slots 3-5 of the frame 84, the communication device may perform a UL transmission(s) in the UL sub-band 830, in response to the indicator indicating that the directions for the slots 3-5 are UL. In the slots 6-9 of the frame 84, the communication device may perform a UL transmission(s) in the UL sub-band 840, since the slots 6-9 of the frame 84 are the UL slots.

In one example for FIG. 8, the communication device does not receive an indicator from the network (not shown in FIG. 8). The indicator may be the second indicator or the third indicator in the examples for the process 30, and indicates directions for the slots 2-5 of the frame 84. In the slots 0-1 of the frame 84, the communication device may perform a DL reception(s) in the DL sub-band 800, since the slots 0-1 of the frame 84 are the DL slots. In the slots 2-3 of the frame 84, the communication device may perform a DL reception(s) in the DL sub-band(s) 810 and/or 820, in response to the slots 2-3 being determined as the DL slots according to the UL-DL configuration (i.e., the slots 2-3 in the frame 82). In the slots 4-5 of the frame 84, the communication device may perform a UL transmission(s) in the UL sub-band 830, in response to the slots 4-5 being determined as the flexible slots according to the UL-DL configuration (i.e., the slots 4-5 in the frame 82). In the slots 6-9 of the frame 84, the communication device may perform a UL transmission(s) in the UL sub-band 840, since the slots 6-9 of the frame 84 are the UL slots.

In one example for FIG. 8, the communication device does not receive an indicator from the network (not shown in FIG. 8). The indicator may be the second indicator or the third indicator in the examples for the process 30, and indicates directions for the slots 2-5 of the frame 84. The communication device obtains a UL-DL pattern [D U U U] indicating the directions for the slots 2-5 of the frame 84 (not shown in FIG. 8). The UL-DL pattern [D U U U] may be the fourth indicator in the examples for the process 30. "D" represents that a direction for a corresponding slot is DL, and "U" represents that a direction for a corresponding slot is UL. The UL-DL pattern [D U U U] represents that a direction for the slot 2 of the frame 84 is DL and directions for the slots 3-5 of the frame 84 are UL. In the slots 0-1 of the frame 84, the communication device may perform a DL reception(s) in the DL sub-band 800, since the slots 0-1 of the frame 84 are the DL slots. In the slot 2 of the frame 84, the communication device may perform a DL reception(s) in the DL sub-band(s) 810 and/or 820, in response to the UL-DL pattern indicating that the direction for the slot 2 is DL. In the slots 3-5 of the frame 84, the communication device may perform a UL transmission(s) in the UL sub-band 830, in response to the UL-DL pattern indicating that the directions for the slots 3-5 are UL. In the slots 6-9 of the frame 84, the communication device may perform a UL transmission(s) in the UL sub-band 840, since the slots 6-9 of the frame 84 are the UL slots.

In one example for FIG. 8, the communication device does not receive an indicator from the network (not shown in FIG. 8). The indicator may be the second indicator or the third indicator in the examples for the process 30, and indicates directions for the slots 2-5 of the frame 84. The communication device re-determines the frame according to the UL-DL configuration like the frame 82, and communicates with the network in the frame 82 according to a conventional communication specification. For example, the communication device determines directions of the slots 4-5 of the frame 82 according to a DCI (e.g., a DCI format 2_0).

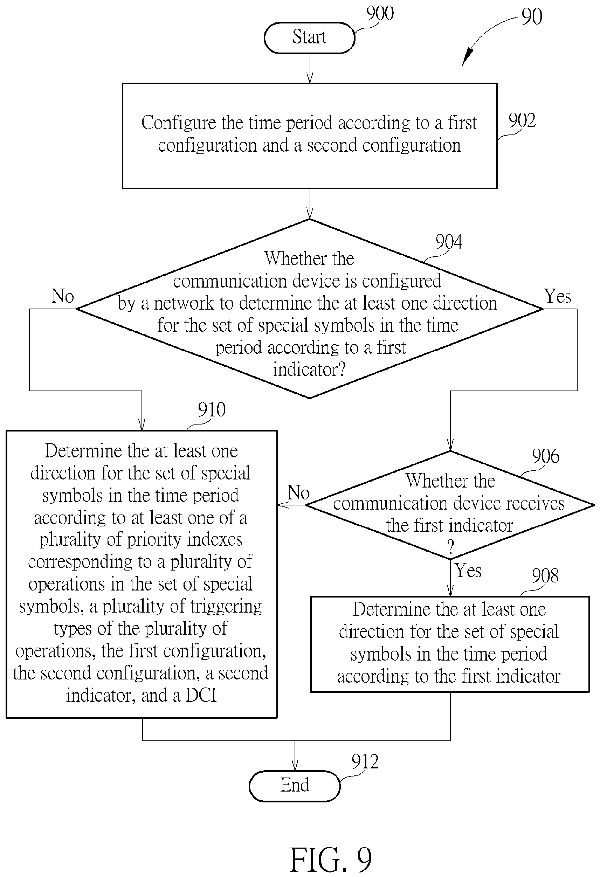

FIG. 9 is a flowchart of a process 90 according to an example of the present invention. The process 90 may be utilized in a communication device (e.g., a communication device 14 in FIG. 1 or the communication device 20 in FIG. 2), to determine at least one direction for a set of special symbols in a time period. The process 90 may be compiled into the program codes 214 and includes the following steps:

| | |
|---|---|
| Step 900: | Start. |
| Step 902: | Configure the time period according to a first configuration and a second |
| | configuration. |
| Step 904: | Whether the communication device is configured by a network to determine the at least one direction for the set of special symbols in the time period according to a first indicator? If yes, perform Step 906. If no, perform Step 910. |
| Step 906: | Whether the communication device receives the first indicator? If yes, perform Step 908. If no, perform Step 910. |
| Step 908: | Determine the at least one direction for the set of special symbols in the time period according to the first indicator, and perform Step 912. |
| Step 910: | Determine the at least one direction for the set of special symbols in the time period according to at least one of a plurality of priority indexes corresponding to a plurality of operations in the set of special symbols, a plurality of triggering types of the plurality of operations, the first configuration, the second configuration, a second indicator, and a DCI. |
| Step 912: | End. |

The following examples may be applied to realize the process 90. In one example, the time period comprises a plurality of symbols. In one example, the first configuration and the second configuration may be the first configuration and the second configuration in the process 30. In one example, the first indicator may be the first indicator in the examples for the process 30, and indicates the at least one direction for the set of special symbols in the time period. In one example, the second indicator may be the fourth indicator (e.g., the TDD UL-DL pattern or the UE specific UL-DL configuration) in the examples for the process 30, and indicates the at least one direction for the set of special symbols in the time period. In one example, the DCI indicates direction(s) of at least one symbol in the set of special symbols. The at least one symbol is configured as at least one flexible symbol according to the first configuration. In one example, Step 910 can be replaced by "Disable performing at least one operation configured/scheduled by a higher-layer configuration in the set of special symbols in the time period".

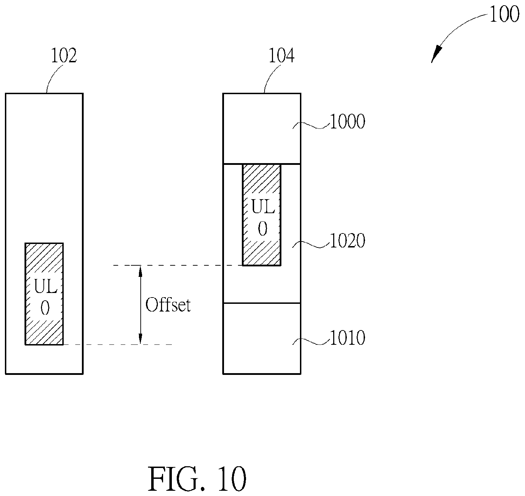

FIG. 10 is a schematic diagram of a communication 100 between a communication device and a network according to an example of the present invention. There are a UL symbol 102 and a special symbol 104 in FIG. 10. The special symbol 104 comprises DL sub-bands 1000 and 1010 and a UL sub-band 1020. The communication device receives an offset in a DCI or a higher-layer signal from the network (not shown in FIG. 10). The offset indicates a number of PRBs by which a UL transmission UL0 is shifted. The communication device may perform the UL transmission UL0 with the network in the UL symbol 102, and/or may perform the UL transmission UL0 with the network in the special symbol 104 by shifting the UL transmission UL0 according to the offset to avoid the UL transmission UL0 overlapping with the DL sub-band 1010 in the special symbol 104. In one example, the terms of "UL symbol 102" and "special symbol 104" may be replaced by "UL slot 102" and "special slot 104", respectively. In one example, the special slot is composited of a set (e.g., 14) of special symbols.

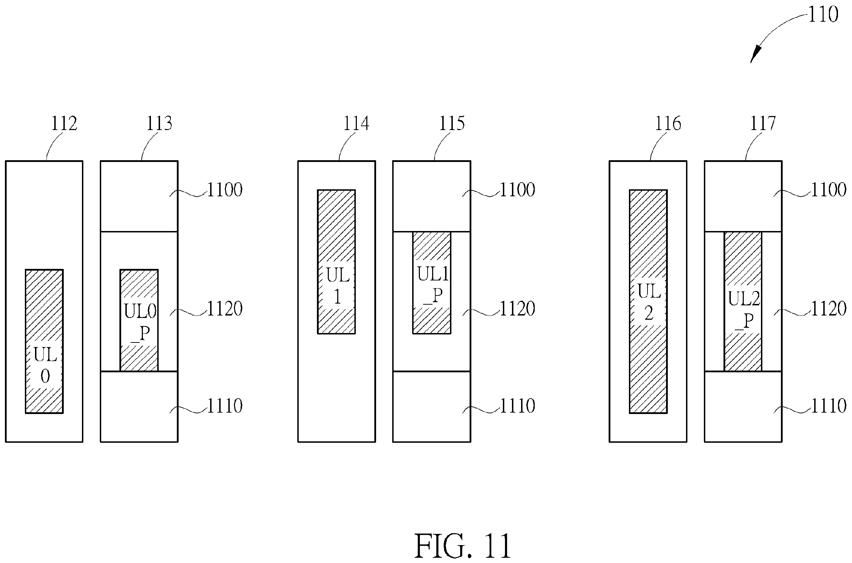

FIG. 11 is a schematic diagram of a communication 110 between a communication device and a network according to an example of the present invention. There are three UL symbols 112, 114 and 116 and three special symbols 113, 115 and 117 in FIG. 11. Each of the special symbols 113, 115 and 117 comprises DL sub-bands 1100 and 1110 and a UL sub-band 1120. In one example, the communication device may perform a UL transmission UL0 with the network in the UL symbol 112, and/or may perform a UL transmission UL0_P with the network in the special symbol 113. The UL transmission UL0_P is a part of the UL transmission UL0 which does not overlap with the DL sub-bands 1100 and 1110 in the special symbol 113. In one example, the communication device may perform a UL transmission UL1 with the network in the UL symbol 114, and/or may perform a UL transmission UL1_P with the network in the special symbol 115. The UL transmission UL1_P is a part of the UL transmission UL1 which does not overlap with the DL sub-bands 1100 and 1110 in the special symbol 115. In one example, the communication device may perform a UL transmission UL2 with the network in the UL symbol 116, and/or may perform a UL transmission UL2_P with the network in the special symbol 117. The UL transmission UL2_P is a part of the UL transmission UL2 which does not overlap with the DL sub-bands 1100 and 1110 in the special symbol 117. That is, the communication device drop a part of a UL transmission which overlaps with a DL sub-band(s) in a special symbol. In one example, the terms of "UL symbols 112, 114 and 116" and "special symbols 113, 115 and 117" may be replaced by "UL slots 112, 114 and 116" and "special slots 113, 115 and 117", respectively.

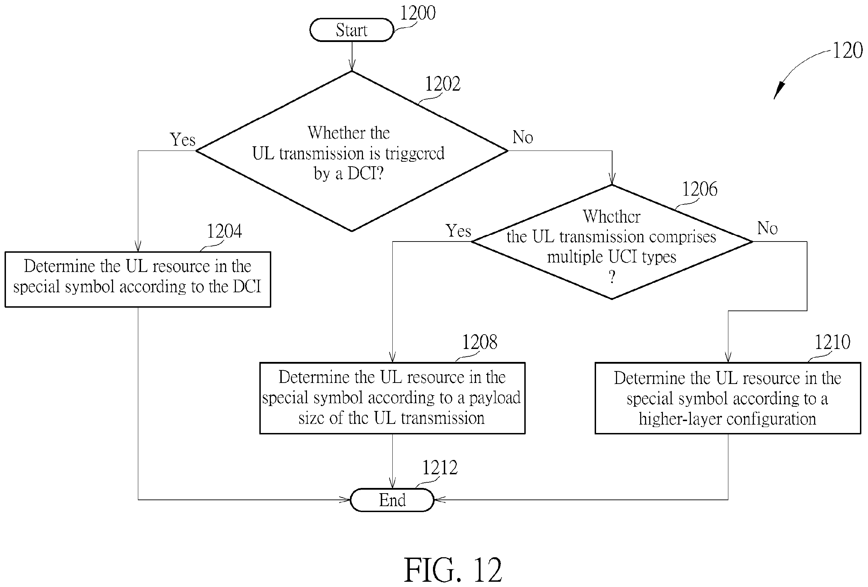

FIG. 12 is a flowchart of a process 120 according to an example of the present invention. The process 120 may be utilized in a communication device (e.g., a communication device 14 in FIG. 1 or the communication device 20 in FIG. 2), to determine a UL resource (e.g., at least one UL sub-band) in a special symbol for performing a UL transmission. The process 120 may be compiled into the program codes 214 and includes the following steps:

| | |
|---|---|
| Step 1200: | Start. |
| Step 1202: | Whether the UL transmission is triggered by a DCI? If yes, perform Step 1204. If no, perform Step 1206. |
| Step 1204: | Determine the UL resource in the special symbol according to the DCI, and perform Step 1212. |
| Step 1206: | Whether the UL transmission comprises multiple UL control information (UCI) types? If yes, perform Step 1208. If no, perform Step 1210. |
| Step 1208: | Determine the UL resource in the special symbol according to a payload size of the UL transmission, and perform Step 1212. |
| Step 1210: | Determine the UL resource in the special symbol according to a higher-layer configuration. |
| Step 1212: | End. |

The following examples may be applied to realize the process 120. In one example, the UL transmission may be one of the at least one UL transmission in the examples for the process 30. In one example, the higher-layer configuration (e.g., the RRC configuration) comprises at least one of the first spatial relation information, the second spatial relation information, the first power information, the second power information, the first code rate, and the second code rate. In one example, the multiple UCI types comprises at least one of a HARQ-ACK, a CSI, a RS, a SRS, a level 1 reference symbol received power (L1-RSRP), a level 1 signal to interference plus noise ratio (L1-SINR), a channel quality indicator (CQI), a precoding matrix indicator (PMI), and a rank indication (RI), but is not limited herein.

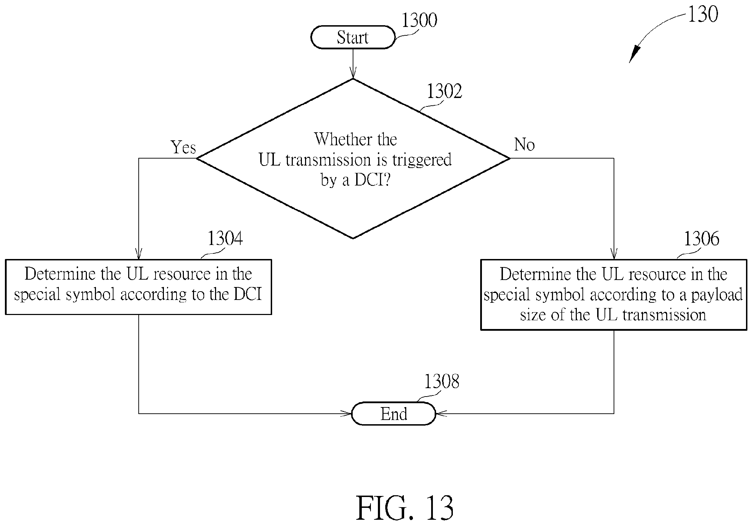

FIG. 13 is a flowchart of a process 130 according to an example of the present invention. The process 130 may be utilized in a communication device (e.g., a communication device 14 in FIG. 1 or the communication device 20 in FIG. 2), to determine a UL resource (e.g., at least one UL sub-band) in a special symbol for performing a UL transmission. The process 130 may be compiled into the program codes 214 and includes the following steps:

| | |
|---|---|
| Step 1300: | Start. |
| Step 1302: | Whether the UL transmission is triggered by a DCI? If yes, perform Step 1304. If no, perform Step 1306. |
| Step 1304: | Determine the UL resource in the special symbol according to the DCI, and perform Step 1308. |
| Step 1306: | Determine the UL resource in the special symbol according to a payload size |
| | of the UL transmission. |
| Step 1308: | End. |

The following example may be applied to realize the process 130. In one example, the UL transmission may be one of the at least one UL transmission in the examples for the process 30.

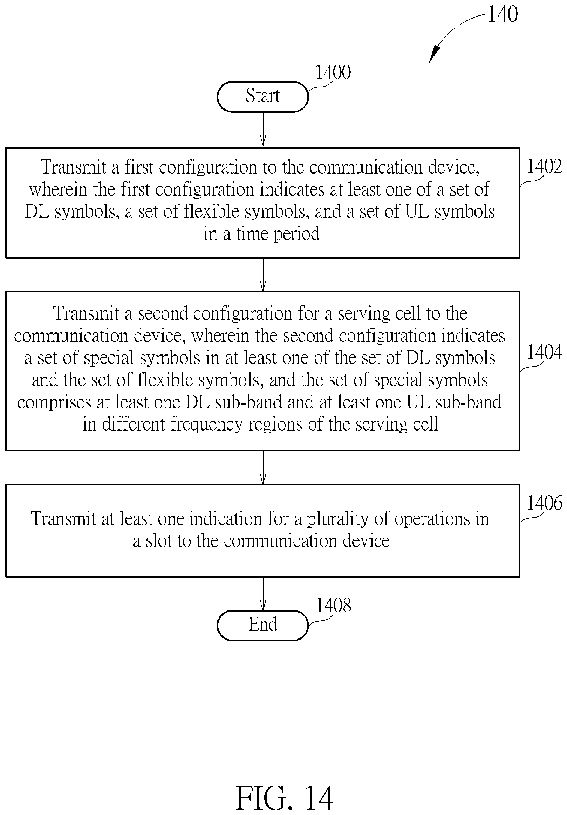

FIG. 14 is a flowchart of a process 140 according to an example of the present invention. The process 140 may be utilized in a network (e.g., a network 12 in FIG. 1 or the communication device 20 in FIG. 2), to handle a communication with a serving cell. The process 140 may be compiled into the program codes 214 and includes the following steps:

| | |
|---|---|
| Step 1400: | Start. |
| Step 1402: | Transmit a first configuration to the communication device, wherein the first configuration indicates at least one of a set of DL symbols, a set of flexible symbols, and a set of UL symbols in a time period. |
| Step 1404: | Transmit a second configuration for a serving cell to the communication device, wherein the second configuration indicates a set of special symbols in at least one of the set of DL symbols and the set of flexible symbols, and the set of special symbols comprises at least one DL sub-band and at least one UL sub-band in different frequency regions of the serving cell. |
| Step 1406: | Transmit at least one indication for a plurality of operations in a slot to the communication device. |
| Step 1408: | End. |

According to the process 140, the network transmits a first configuration (e.g., TDD-UL-DL-ConfigCommon) to the communication device. The first configuration indicates at least one of a set of DL symbols, a set of flexible symbols, and a set of UL symbols in a time period (e.g., at least one symbol or a radio frame). The network transmits a second configuration for a serving cell to the communication device. The second configuration indicates a set of special symbols in at least one of the set of DL symbols and the set of flexible symbols, and the set of special symbols comprises at least one DL sub-band and at least one UL sub-band in different frequency regions of the serving cell. The network transmits at least one indication for a plurality of operations in a slot to the communication device. That is, the network provides information (e.g., the first configuration, the second configuration and the at least one indication) to the communication device. The communication device determines whether to perform at least one operation of the plurality of operations in the slot according to the information, in order to avoid switching a transmission direction multiple times in the slot. Thus, the communication between the network and the communication device is performed normally.

Realization of the process 140 is not limited to the above description. The following examples may be applied to realize the process 140.

In one example, the plurality of operations overlap with at least one special symbol in the set of special symbols. In one example, the plurality of operations comprise at least one DL reception and at least one UL transmission. In one example, the slot comprises a plurality of symbols. In one example, the plurality of symbols are configured by at least one of the first configuration and the second configuration. In one example, the network receives information from the communication device. In one example, the information indicates whether the communication device supports more than one switch point in one slot. In one example, a switch point indicates a direction switch (e.g., a TX-RX switch or a RX-TX switch).

In one example, the network receives a capability information from the communication device regarding to whether the communication device is capable to receive a first indicator. In one example, the network transmits the first indicator to the communication device, e.g., in response to the capability information. In one example, the first indicator indicates at least one direction for the slot (e.g., the set of special symbols in the slot), and the at least one direction comprises at least one of DL, UL and flexible. In one example, the first indicator provides a direction for each special symbol in the set of special symbols in the slot. In one example, the first indicator is comprised in at least one of a DCI, a MAC CE, and a RRC signal.

The examples in the process 30 may be applied to the process 140, and are not narrated herein for brevity.

The operation of "determine" described above may be replaced by the operation of "compute", "calculate", "obtain", "generate", "output, "use", "choose/select", "decide" or "is configured to". The phrase of "according to" described above may be replaced by "in response to". The term of "via" described above may be replaced by "on", "in" or "at". The term of "when" or "if' described above may be replaced by "in response to". The term of "special symbol" may be replaced by "sub-band non-overlapping full duplex (SBFD) symbol". The terms of "the set of DL symbols", "the set of flexible symbols", "the set of special symbols" and "the set of UL symbols" may be replaced by "the set of DL slots", "the set of flexible slots", "the set of special slots" and "the set of UL slots", respectively. The terms of "the DL symbol", "the flexible symbol", "the special symbol" and "the UL symbol" may be replaced by "the DL slot", "the flexible slot", "the special slot" and "the UL slot", respectively. The term of "DCI" may be replaced by "DCI format" or "PDCCH".

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, embodiments of the present invention provide methods and a communication device for handling a communication with a serving cell. A number of switch points in a time period is reduced according to the embodiments of the present invention. The communication device does not need to switch a transmission direction multiple times in the time period. Thus, the problem of handling the communication between the communication device and the network can be solved.

## Claims

1. A method for handling a communication with a serving cell of a communication device (14, 20), **characterized by:**
receiving a first configuration from a network, wherein the first configuration indicates at least one of a set of downlink, DL, symbols, a set of flexible symbols, and a set of uplink, UL, symbols in a time period (302);
receiving a second configuration for the serving cell from the network, wherein the second configuration indicates a set of special symbols in at least one of the set of DL symbols and the set of flexible symbols, and the set of special symbols comprises at least one DL sub-band and at least one UL sub-band in different frequency regions of the serving cell (304);
receiving at least one indication for a plurality of operations in a slot from the network (306); and
determining whether to perform at least one operation of the plurality of operations in the slot (308);
wherein the plurality of operations overlap with at least one special symbol in the set of special symbols;
wherein the plurality of operations comprise at least one DL reception and at least one UL transmission.

2. The method of claim 1, **characterized in that** the method further comprises:
determining a UL resource according to at least one of a resource configuration and a starting physical resource block, PRB; and
performing one of the at least one UL transmission on the UL resource in a special symbol in the set of special symbols;
wherein the starting PRB is specific for the at least one special symbol;
wherein a first number of PRB of the UL resource is the same as a second number of PRB for the one of the at least one UL transmission not overlapping with the at least one special symbol.

3. The method of claim 2, **characterized in that** the starting PRB is determined according to at least one of an offset, the resource configuration, a DL control information, DCI, and a higher-layer signal, and the offset indicates a set of frequency domain resource.

4. The method of claim 1, **characterized in that** the method further comprises:
transmitting information to the network;
wherein the information indicates whether the communication device supports more than one switch point in one slot.

5. The method of claim 1, **characterized in that** a transmission power for one of the at least one UL transmission is determined according to a first power information configured by the network.

6. The method of claim 1, **characterized in that** one of the at least one UL transmission is configured with a first power information and a second power information, wherein the first power information corresponds to a special symbol in the set of special symbols, and the second power information corresponds to a UL symbol in the set of UL symbols.

7. The method of claim 1, **characterized in that** a spatial relation for one of the at least one UL transmission is determined according to a first spatial relation information configured by the network; or the one of the at least one UL transmission is configured with the first spatial relation information and a second spatial relation information.

8. The method of claim 7, **characterized in that** the first spatial relation information corresponds to a special symbol in the set of special symbols, and the second spatial relation information corresponds to a UL symbol in the set of UL symbols.

9. The method of claim 1, **characterized in that** the method further comprises:
receiving a first indicator from the network;
wherein the first indicator indicates at least one direction for the slot, and the at least one direction comprises at least one of DL, UL and flexible.

10. The method of claim 9, **characterized in that** the first indicator is comprised in at least one of a DCI, a medium access control, MAC, control element, CE, and a radio resource control, RRC, signal.

11. The method of claim 9, **characterized in that** the method further comprises at least one of following steps:
performing a first operation of the plurality of operations in a first part of the slot, in response to the first operation being a UL transmission and the first indicator indicating UL for the first part of the slot;
performing a second operation of the plurality of operations in a second part of the slot, in response to the second operation being a DL reception and the first indicator indicating DL for the second part of the slot;
disabling performing a third operation of the plurality of operations in a third part of the slot, in response to the third operation being a UL transmission and the first indicator indicating DL for at least one first symbol of the third part of the slot;
disabling performing a fourth operation of the plurality of operations in a fourth part of the slot, in response to the fourth operation being a DL reception and the first indicator indicating UL for at least one second symbol of the fourth part of the slot; and
performing a fifth operation of the plurality of operations in a fifth part of the slot, in response to the fifth operation being triggered by a DCI and the first indicator indicating flexible for the fifth part of the slot.

12. The method of claim 1, **characterized in that** the method further comprises:
performing a sixth operation of the plurality of operations in a sixth part of the slot, in response to the sixth operation being a UL transmission and a first direction in the sixth part of the slot is not DL;
wherein the first direction is a fixed direction or is determined according to a higher-layer configuration.

13. The method of claim 1, **characterized in that** the method further comprises:
performing a seventh operation of the plurality of operations in a seventh part of the slot, in response to the seventh operation being a DL reception and a second direction in the seventh part of the slot is not UL;
wherein the second direction is a fixed direction or is determined according to a higher-layer configuration.

14. The method of claim 1, **characterized in that** the method further comprises:
disabling performing an eighth operation of the plurality of operations, in response to the eighth operation being indicated by a higher-layer configuration.

15. The method of claim 14, **characterized in that** the method further comprises:
not receiving a second indicator from the network;
wherein the second indicator indicates at least one direction for the slot, and the at least one direction comprises at least one of DL, UL and flexible.

16. The method of claim 1, **characterized in that** the method further comprises:
determining a plurality of priorities for the plurality of operations, in response to more than one switch point in the slot or in response to the plurality of operations with different directions overlapping in a time period.

17. The method of claim 16, **characterized in that** a tenth operation of the plurality of operations is a DL reception other than a semi persistent scheduling physical DL shared channel, SPS-PDSCH, in response to a eleventh operation of the plurality of operations overlapping with the tenth operation is a configure grant physical uplink shared channel, CG-PUSCH; or a twelfth operation of the plurality of operations is a UL transmission other than a CG-PUSCH, in response to a thirteenth operation of the plurality of operations overlapping with the twelfth operation is a SPS-PDSCH.

18. The method of claim 16, **characterized in that** the method further comprises at least one of following steps:
not receiving a third indicator from the network, wherein the third indicator indicates at least one direction for the slot, and the at least one direction comprises at least one of DL, UL and flexible;
determining the plurality of priorities according to a plurality of priority indexes, wherein the plurality of priority indexes correspond to the plurality of operations, respectively;
determining that a fourteenth operation of the plurality of operations has a lower priority than a fifteenth operation of the plurality of operations, in response to the fourteenth operation for transmitting or receiving a reference signal, RS;
determining that a sixteenth operation of the plurality of operations has a higher priority than a seventeenth operation of the plurality of operations, in response to the sixteenth operation being a DL reception comprising a PDSCH and a first priority index for a physical uplink control channel, PUCCH, for transmitting a hybrid automatic repeat request acknowledgement, HARQ-ACK, of the PDSCH being higher than a second priority index corresponding to the seventeenth operation;
determining that a eighteenth operation of the plurality of operations has the higher priority than a nineteenth operation of the plurality of operations, in response to the eighteenth operation being triggered by a first DCI and the nineteenth operation being triggered by a signal other than the first DCI;
determining that a twentieth operation of the plurality of operations has the higher priority than a twenty-first operation of the plurality of operations, in response to the twentieth operation being triggered by a second DCI that ends later than a third DCI which triggers the twenty-first operation; and
determining that a twenty-second operation of the plurality of operations has the higher priority than a twenty-third operation of the plurality of operations, in response to the twenty-second operation starting earlier than the twenty-third operation.

19. The method of claim 1, **characterized in that** the method further comprises:
not performing a twenty-fourth operation of the plurality of operations, in response to the twenty-fourth operation overlapping with a twenty-fifth operation of the plurality of operations in the time period;
wherein the twenty-fourth operation is a UL transmission comprising a first PUCCH for a first HARQ-ACK, and the first HARQ-ACK is able to be deferred in a next slot;
wherein the twenty-fifth operation is a DL reception comprising a PDSCH which is not triggered by a DCI.

20. The method of claim 19, **characterized in that** a first priority of the first PUCCH and a second priority of a second PUCCH for transmitting a second HARQ-ACK of the PDSCH are the same.

21. A communication device (14, 20) for handling a communication with a serving cell,
**characterized by:**
at least one storage device; and
at least one processing circuit, coupled to the at least one storage device, wherein the at least one storage device is configured to store instructions, and the at least one processing circuit is configured to execute the instructions of:
receiving a first configuration from a network, wherein the first configuration indicates at least one of a set of downlink, DL, symbols, a set of flexible symbols, and a set of uplink, UL, symbols in a time period (302);
receiving a second configuration for the serving cell from the network, wherein the second configuration indicates a set of special symbols in at least one of the set of DL symbols and the set of flexible symbols, and the set of special symbols comprises at least one DL sub-band and at least one UL sub-band in different frequency regions of the serving cell (304);
receiving at least one indication for a plurality of operations in a slot from the network (306); and
determining whether to perform at least one operation of the plurality of operations in the slot (308);
wherein the plurality of operations overlap with at least one special symbol in the set of special symbols;
wherein the plurality of operations comprise at least one DL reception and at least one UL transmission.

22. A method for a network (12, 20) handling a communication with a communication device (14, 20), **characterized by:**
transmitting a first configuration to the communication device, wherein the first configuration indicates at least one of a set of downlink, DL, symbols, a set of flexible symbols, and a set of uplink, UL, symbols in a time period (1402);
transmitting a second configuration for a serving cell to the communication device, wherein the second configuration indicates a set of special symbols in at least one of the set of DL symbols and the set of flexible symbols, and the set of special symbols comprises at least one DL sub-band and at least one UL sub-band in different frequency regions of the serving cell (1404); and
transmitting at least one indication for a plurality of operations in a slot to the communication device (1406);
wherein the plurality of operations overlap with at least one special symbol in the set of special symbols;
wherein the plurality of operations comprise at least one DL reception and at least one UL transmission.
